# EUROPÄISCHE PATENTSCHRIFT

(11) **EP 1 521 670 B1**
(45) Veröffentlichungstag und Bekanntmachung des Hinweises auf die Patenterteilung: **24.10.2007**
(21) Anmeldenummer: 03761398.1
(22) Anmeldetag: 16.05.2003
(51) Int. Cl.: B29C 53/80, B29D 23/20

(54) **VORRICHTUNG ZUM FÜHREN EINZELNER VERSTÄRKUNGSFÄDEN**
DEVICE FOR THE GUIDING OF INDIVIDUAL REINFORCEMENT THREADS
DISPOSITIF DE GUIDAGE DE FILS DE RENFORT INDIVIDUELS

(30) Priorität: 28.06.2002 DE 10229078
(43) Veröffentlichungstag der Anmeldung: 13.04.2005
(73) Patentinhaber: ContiTech Luftfedersysteme GmbH, 30165 Hannover (DE)
(72) Erfinder: BERGER, Markus, 31319 Sehnde (DE); OEHL, Rainer, 30938 Grossburgwedel (DE); BINDER, Klaus, 31157 Sarstedt (DE); BEDERNA, Christoph, 31515 Wunstorf (DE)
(74) Vertreter: Finger, Karsten
(86) Internationale Anmeldenummer: PCT/DE2003/001585
(87) Internationale Veröffentlichungsnummer: WO 2004/002719

(56) Entgegenhaltungen:
- DE-A- 19 846 852
- US-A- 3 332 815
- US-A- 4 288 267
- US-B1- 6 263 937

## Beschreibung

Die Erfindung betrifft eine Vorrichtung zum Führen einzelner Verstärkungsfäden auf einen Träger, der in Richtung der Trägerachse vortreibbar ist.

Eine gattungsgemäße Vorrichtung ist beispielsweise aus der DE 198 46 852 C2 bekannt und wird insbesondere für ein Spulengatter zur Einarbeitung einzelner Verstärkungsfäden in einen Schlauchrohling verwendet. Dabei wird ein Kautschukschlauch auf einem Dorn im Endlosverfahren extrudiert. Auf diese erste Kautschukschicht wird eine dichte Lage von Fäden aufspiralisiert, indem ein Spulengatter um den aus Dorn und Kautschukschlauch gebildeten Träger rotiert. Durch das Vortreiben des Trägers in Trägerachsrichtung entsteht eine spiralförmige Fadenlage mit einem Fadenwinkel, der von der Vortriebsgeschwindigkeit und der Rotationsgeschwindigkeit des Spulengatters abhängt.

Aus der DE 198 46 852 C2 ist bekannt, dass die Fäden durch eine Reihe von Löchern geführt werden, die auf einer Umfangslinie eines Positionierrings äquidistant voneinander angeordnet sind. Durch jedes Loch wird jeweils ein Verstärkungsfaden radial nach innen geführt. Der Positionierring umfasst ein rotationssymmetrisches, trichterförmiges Umlenkelement konzentrisch. Das Umlenkelement hat einen sich stetig verjüngenden Kanal mit einer ringförmigen Eintrittsöffnung und einer kleineren ringförmigen Austrittsöffnung, wobei die Verstärkungsfäden auf der radial inneren Oberfläche des Umlenkelementes auf den Träger geführt werden, der von dem Umlenkelement umfasst wird.

Es hat sich herausgestellt, dass das Einfädeln durch Löcher sehr arbeitsintensiv ist. Weiterhin verlaufen die Verstärkungsfäden zwischen den Löchern im Positionierring und dem Träger auf einer relativ langen radialen inneren Oberfläche frei und ungeführt; weil der Positionierring einen großen Durchmesser haben muss, um alle Bohrungen unterzubringen. Hierdurch kann kein konstanter Abstand der Verstärkungsfäden auf dem Träger gewährleistet werden. Zudem ist es möglich, dass sich einzelne Verstärkungsfäden überkreuzen.

Aufgabe der Erfindung war es daher, eine verbesserte Vorrichtung zum Führen einzelner Verstärkungsfäden zu schaffen, mit der die vorstehenden Nachteile gelöst werden.

Die Aufgabe wird gelöst durch
- eine Positionierscheibe mit einer Vielzahl von auf einem Kreisring der Positionierscheibe verteilt angeordneten Fadenführungen, und
- ein rotationssymmetrisches Umlenkelement.

Die Positionierscheibe und das Umlenkelement umfassen den Träger jeweils konzentrisch, wobei das Umlenkelement innerhalb der Positionierscheibe angeordnet und axial zur Positionierscheibe ausgerichtet ist. Die einlaufseitig dem Träger zugewandte umlaufende Innenkante des Umlenkelementes ist gekrümmt und die Fadenführungen der Positionierscheibe münden unmittelbar an der Stirnseite der gekrümmten Innenkante.

Durch die Verwendung einer Positionierscheibe mit Schlitzen anstelle eines Positionierrings mit Bohrungen, der das Umlenkelement umschließt, kann der Durchmesser, auf dem die Verstärkungsfäden geführt werden, deutlich verringert werden. Hierdurch wird die Strecke, auf der die Verstärkungsfäden zwischen den Fadenführungen und dem Träger frei und ungeführt laufen, erheblich verkürzt und ein Wandern und Kreuzen der Fäden verhindert. Das arbeitsintensive Einfädeln der Verstärkungsfäden in die Bohrungen wird durch das bessere und schnellere Einlegen der Fäden in die Schlitze substituiert.

Vorteilhafterweise sind die Fadenführungen aus sich radial erstreckende oder schräg angeordnete Stege ausgebildet. Damit kann die Anzahl der mit der Vorrichtung führbaren Verstärkungsfäden erheblich im Vergleich zu Bohrungen vergrößert werden, da nur ein Steg mit einer geringen Stärke zwischen den Schlitzen erforderlich ist, und die Verstärkungsfäden lassen sich leicht in die Schlitze einlegen.

Vorzugsweise ist eine kreisbandförmige Abdeckscheibe lösbar, beispielsweise magnetisch, auf der Oberfläche der Positionierscheibe im Bereich der Fadenführungen montierbar. Die Abdeckscheibe verhindert, dass die Fäden aus den Fadendurchführungsöffnungen, insbesondere den Schlitzen, rutschen.

Für das Einfädeln der Verstärkungsfäden in die Vorrichtung beim Rüsten einer Spiralisiervorrichtung ist es vorteilhaft, wenn eine Abdeckscheibe mit einem sich radial erstreckenden Schlitz auf der Oberfläche der Positionierscheibe im Bereich der Fadendurchführungsöffnungen montiert wird. Im Bereich des Schlitzes können auf diese Weise Verstärkungsfäden eingefädelt werden, während die bereits eingefädelten Verstärkungsfäden durch die Abdeckscheibe sicher gehalten werden. Insbesondere zur Erleichterung des Rüstvorgangs ist die Abdeckscheibe vorzugsweise magnetisch an die Positionierscheibe anheftbar und kann so von Schlitz zu Schlitz weiter gedreht werden.

Die Erfindung wird nachfolgend anhand der beigefügten Zeichnungen näher erläutert. Es zeigen:
- **Figur 1** -: eine Querschnittsansicht der erfindungsgemäßen Vorrichtung zum Führen einzelner Verstärkungsfäden;
- **Figur 2** -: eine Frontansicht der Vorrichtung aus der Figur 1;
- **Figur 3** -: eine Detailansicht eines Ausschnitts aus der Figur 2.

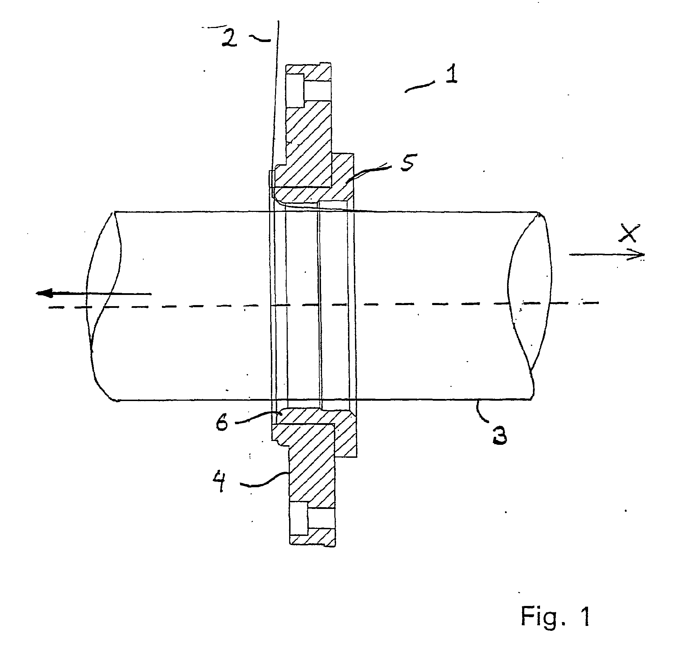

Die Figur 1 lässt eine Vorrichtung 1 zum Führen einzelner Verstärkungsfäden 2 auf einen Träger 3 erkennen, der in Richtung der Trägerachse X vorgetrieben wird. Der Träger 3 wird hierbei konzentrisch von der Vorrichtung 1 umfasst.

Die Vorrichtung 1 hat eine Positionierscheibe 4 mit einer Vielzahl von Fadenführungen, die durch radial sich nach außen erstreckende Stege ausgebildet sind. Die Fadenführungen sind äquidistant auf einem Kreisring der Positionierscheibe 4 voneinander verteilt angeordnet.

Unterhalb der Positionierscheibe 4 ist ein rotationssymmetrisches Umlenkelement 5 axial angeordnet. Die einlaufseitig dem Träger 3 zugewandte Innenkante 6 des Umlenkelementes 5 ist gekrümmt, so dass die Verstärkungsfäden 2 von den Fadenführungen winklig auf den Träger 3 umgelenkt werden. Die Fadenführungen der Positionierscheibe 4 sind hierbei derart im Bezug auf das Umlenkelement 5 angeordnet, dass die Verstärkungsfäden 2 unmittelbar an die Stirnseite der gekrümmten Innenkanten 6 geführt werden und die Strecke, in der die Fäden 2 von den Fadenführungen zu dem Träger 3 frei laufen, verkürzt wird. Weiterhin wird durch eine nur kleine Umlenkfläche der Innenkante 6 und einen nur sehr kleinen Luftspalt zum Träger 3 ein seitliches Wandern und Überlagern der Fäden 2 verhindert.

In dem dargestellten Ausführungsbeispiel ist das Umlenkelement 5 in Form einer Hülse in die Positionierscheibe 4 geschoben.

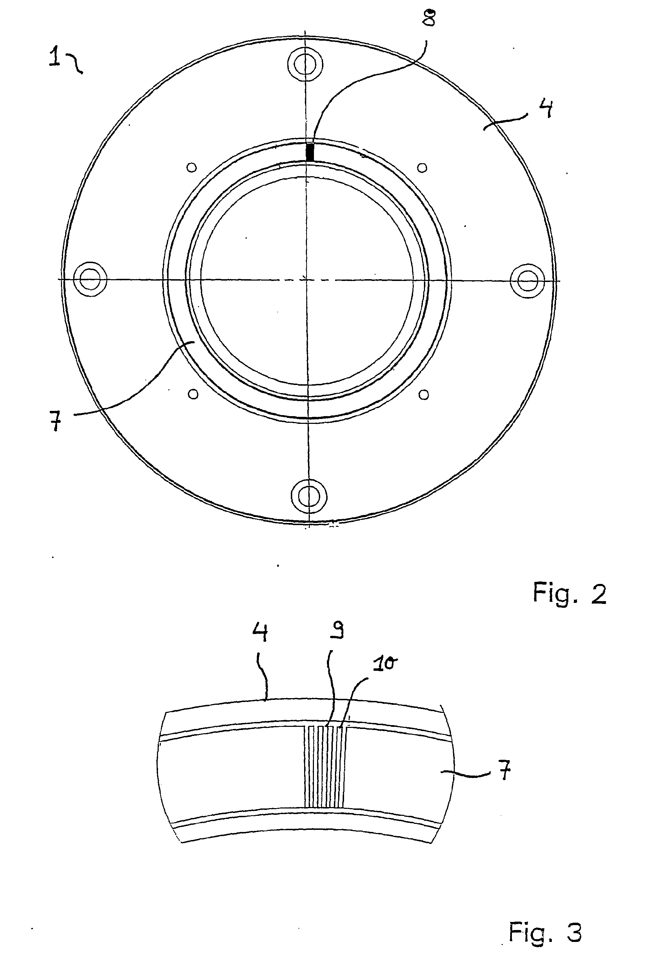

Die Figur 2 lässt eine Frontansicht der Vorrichtung 1 erkennen, wobei eine kreisringförmige Abdeckscheibe 7 im Bereich der Fadenführungen magnetisch auf die Oberfläche der Positionierscheibe 4 heftbar ist. Die Abdeckscheibe 7 hat einen Montageschlitz 8, um mindestens eine ausgewählte Fadenführung freizugeben und ein Einfädeln eines Verstärkungsfadens 2 in die Fadenführung auf den Träger 3 zu ermöglichen. Zum Einrüsten eines Spulengatters wird die Abdeckscheibe 7 sukzessive gedreht und die Verstärkungsfäden 2 nacheinander durch die jeweiligen Fadenführungen geführt. Die Abdeckscheibe 7 verhindert dabei, dass bereits eingefädelte Verstärkungsfäden 2 sich wieder aus den Fadendurchführungsöffnungen lösen.

Die Figur 3 lässt eine Ausschnittsansicht der Positionierscheibe mit magnetisch angehefteter Abdeckscheibe 7 erkennen. Im Bereich des Montageschlitzes 8 der Abdeckscheibe 7 sind die Fadenführungen 9 zu erkennen, die durch sich radial nach außen erstreckende Stege gebildet sind. Die Verstärkungsfäden 2 können damit leicht in die Schlitze eingelegt werden.

## Patentansprüche

1. Vorrichtung (1) zum Führen einzelner Verstärkungsfäden (2) auf einen Träger (3), der in Richtung der Trägerachse (X) vortreibbar ist,
wobei
- eine Positionierscheibe (4) mit einer Vielzahl von auf einem Kreisring der Positionierscheibe (4) verteilt angeordneten Fadenführungen (9), und
- ein rotationssymmetrisches Umlenkelement (5), und
wobei
- die Positionierscheibe (4) und das Umlenkelement (5) den Träger (3) jeweils konzentrisch umfassen,
das Umlenkelement (5) innerhalb der Positionierscheibe (4) angeordnet und axial zur Positionierscheibe (4) ausgerichtet ist,
- die einlaufseitig dem Träger (3) zugewandte umlaufende Innenkante (6) einer Stirnseite des Umlenkelementes (5) gekrümmt ist, und wobei
- die Fadenführungen (9) unmittelbar an der gekrümmten Innenkante (6) münden.

2. Vorrichtung nach Anspruch 1, **dadurch gekennzeichnet, dass** die Fadenführungen (9) durch sich radial erstreckende oder schräg angeordnete Stege ausgebildet sind.

3. Vorrichtung nach einem der vorhergehenden Ansprüche, **gekennzeichnet durch** eine kreisbandförmige Abdeckscheibe (7), die lösbar auf der Oberfläche der Positionierscheibe (4) im Bereich der Fadenführungen (9) montierbar ist.

4. Vorrichtung nach Anspruch 3, **dadurch gekennzeichnet, dass** die Abdeckscheibe (7) einen sich radial erstreckenden Schlitz hat.

5. Vorrichtung nach Anspruch 3 oder 4, **dadurch gekennzeichnet, dass** die Abdeckscheibe (7) magnetisch an die Positionierscheibe (4) anheftbar ist.

## Claims

1. Device (1) for guiding individual reinforcing threads (2) onto a support (3), which can be advanced in the direction of the support axis (X), having
- a positioning disc (4) with a multiplicity of thread guides (9) arranged such that they are distributed on a circular ring of the positioning disc (4), and
- a rotationally symmetrical diverting element (5), and
in which
- the positioning disc (4) and the diverting element (5) each concentrically enclose the support (3),
- the diverting element (5) is arranged within the positioning disc (4) and is aligned axially in relation to the positioning disc (4),
- the peripheral inner edge (6) of an end face of the diverting element (5) that is facing the support (3) on the inlet side is curved, and in which
- the thread guides (9) open out directly on the curved inner edge (6).

2. Device according to Claim 1, **characterized in that** the thread guides (9) are formed by radially extending or obliquely arranged webs.

3. Device according to one of the preceding claims, **characterized by** a covering disc (7) in the form of a circular band, which can be detachably mounted on the surface of the positioning disc (4) in the region of the thread guides (9).

4. Device according to Claim 3, **characterized in that** the covering disc (7) has a radially extending slit.

5. Device according to Claim 3 or 4, **characterized in that** the covering disc (7) can be magnetically attached to the positioning disc (4).

## Revendications

1. Dispositif (1) pour guider des fils individuels de renfort (2) sur un support (3) qui peut être avancé dans la direction de l'axe (X) du support, comprenant :
- un disque de positionnement (4) avec plusieurs guide-fils (9) répartis sur un anneau circulaire du disque de positionnement (4) et
- un élément de déviation (5) à symétrie de rotation, et
dans lequel
- le disque de positionnement (4) et l'élément de déviation (5) entourent, respectivement, concentriquement le support (3),
- l'élément de déviation (5) est disposé à l'intérieur du disque de positionnement (4) et est orienté axialement par rapport au disque de positionnement (4),
- le bord périphérique intérieur (6) tourné du côté de l'entrée du support (3) d'un côté frontal de l'élément de déviation (5) est incurvé et
- les guide-fils (9) débouchent directement sur le bord intérieur (6) courbé.

2. Dispositif selon la revendication 1, **caractérisé en ce que** les guide-fils (9) sont formés par des nervures qui s'étendent radialement ou obliquement.

3. Dispositif selon l'une des revendications précédentes, **caractérisé par** un disque de recouvrement (7) en forme de ruban circulaire qui peut être monté de manière libérable sur la surface du disque de positionnement (4) dans la zone des guide-fils (9).

4. Dispositif selon la revendication 3, **caractérisé en ce que** le disque de recouvrement (7) présente une fente qui s'étend radialement.

5. Dispositif selon les revendications 3 ou 4, **caractérisé en ce que** le disque de recouvrement (7) peut adhérer magnétiquement au disque de positionnement (4) .
